# EUROPÄISCHE PATENTSCHRIFT

(11) **EP 4 264 421 B1**
(45) Veröffentlichungstag und Bekanntmachung des Hinweises auf die Patenterteilung: **15.04.2026**
(21) Anmeldenummer: 21839945.9
(22) Anmeldetag: 16.12.2021
(51) Int. Cl.: G06F 9/445, G06F 21/51, G06F 21/64, G06F 21/57

(54) **VERFAHREN ZUM BETREIBEN EINES STEUERGERÄTS, AUF DEM MEHRERE APPLIKATIONEN AUSGEFÜHRT WERDEN**
METHOD FOR OPERATING A CONTROL UNIT ON WHICH MULTIPLE APPLICATIONS ARE EXECUTED
PROCÉDÉ DE FONCTIONNEMENT D'UNE UNITÉ DE COMMANDE SUR LAQUELLE SONT EXÉCUTÉES DE MULTIPLES APPLICATIONS

(30) Priorität: 21.12.2020 DE 102020216380
(43) Veröffentlichungstag der Anmeldung: 25.10.2023
(73) Patentinhaber: Robert Bosch GmbH, 70442 Stuttgart (DE)
(72) Erfinder: BLOTT, Gregor, 38239 Salzgitter (DE); BOECHER, Nils, 65185 Wiesbaden (DE)
(86) Internationale Anmeldenummer: PCT/EP2021/086071
(87) Internationale Veröffentlichungsnummer: WO 2022/136083

(56) Entgegenhaltungen:
- US-A1- 2009 257 595
- US-A1- 2013 036 103
- US-B1- 6 802 006

## Beschreibung

Die vorliegende Erfindung betrifft das Betreiben eines Steuergeräts unter der Randbedingung, dass die ordnungsgemäße Funktion dieses Steuergeräts nur durch ein geordnetes Zusammenspiel mehrerer Applikationen gewährleistet werden kann.

### Stand der Technik

In Steuergeräten für Fahrzeuge wird ein immer größer werdender Anteil der Funktionalität nicht mehr durch eine statische Anordnung fester integrierter Schaltkreise festgelegt, sondern durch eine Software, die auf einem als Computer ausgebildeten Steuergerät läuft.

Zunehmend bezieht sich die Funktionalität dieser Steuergeräte auch auf Aspekte des Fahrzeugbetriebs, die für die Betriebserlaubnis des Fahrzeugs relevant sind. Das bedeutet, dass unbefugte Änderungen an der Software durch den Nutzer des Fahrzeugs zu einem Erlöschen der Betriebserlaubnis führen können und daher technisch erschwert werden müssen. Ein Beispiel für eine solche Änderung ist das "Chip-Tuning", das die Motorleistung des Fahrzeugs steigert, aber zu Abweichungen des Abgas- oder Geräuschverhaltens von den genehmigten Werten führt.

Manipulationen dieser Art können beispielsweise auch dazu führen, dass das Fahrzeug einem erhöhten Verschleiß ausgesetzt ist. Wenn der Nutzer bei einem Defekt des Fahrzeugs den Urzustand der Software wieder herstellt, bevor er das Fahrzeug reparieren lässt, bleibt die Manipulation möglicherweise unbemerkt.

Der Nutzer könnte dann eine Reparatur auf Garantie oder Kulanz erhalten, obwohl er die Garantie durch die Manipulation eigentlich verwirkt hat.

Die DE 10 2012 110 559 A1, die DE 10 2012 109 619 A1, die DE 10 2014 208 385 A1 sowie die DE 10 2012 109 617 A1 offenbaren allgemeinen Stand der Technik zum Schutz von Steuergeräten vor Softwaremanipulationen.

Die US 6,802,006 B1 offenbart die Verknüpfung zweier in einen Computer geladenen Programme. Dabei findet auch eine Authentifizierung der beiden Programme statt. Ferner ist ein Validator offenbart, der in der Lage ist, festzustellen, ob ein Zeiger in einem zweiten Programm auf eine Stelle in einem ersten Programm verweist.

### Offenbarung der Erfindung

Im Rahmen der Erfindung wurde ein Verfahren zum Betreiben eines Steuergeräts, auf dem mehrere Applikationen ausgeführt werden, entwickelt.

Dieses Steuergerät kann insbesondere ein Steuergerät für ein Fahrzeug und/oder für ein Antriebsaggregat eines Fahrzeugs sein. Beispiele für derartige Steuergeräte sind Motorsteuergeräte, Steuergeräte für fahrdynamische Systeme (etwa für die als elektronisches Stabilitätsprogramm, ESP, bekannte Fahrdynamikregelung) sowie Steuergeräte für das zumindest teilweise automatisierte Steuern von Fahrzeugen im Verkehr.

Unter einer Applikation wird insbesondere ein Programm verstanden, das, wenn es auf Hardware des Steuergeräts ausgeführt wird, mindestens einen Teil der nominellen Funktionalität des Steuergeräts implementiert. Eine Applikation umfasst mindestens einen Codeblock, der ausführbaren Programmcode enthält.

Daneben kann die Applikation auch mindestens einen Datenblock umfassen, den der Programmcode zur Erfüllung seiner Funktion benötigt. Der Datenblock kann beispielsweise Kennfelder oder andere Parameter für Regler enthalten.

Beispielsweise kann ein Regler generisch in Programmcode implementiert sein und durch die besagten Kennfelder bzw. sonstigen Parameter an ein konkretes Fahrzeug angepasst werden. Der Programmcode kann beispielsweise auch ein trainiertes Machine Learning-Modul implementieren, wie beispielsweise ein neuronales Netzwerk. Der Datenblock kann dann beispielsweise Parameter enthalten, die das Verhalten des trainierbaren Moduls charakterisieren. Bei einem neuronalen Netzwerk umfassen diese Parameter beispielsweise Gewichte, mit denen Eingaben, die einem Neuron oder einer anderen Verarbeitungseinheit zugeführt werden, zu einer Aktivierung dieses Neurons, bzw. dieser Verarbeitungseinheit, verrechnet werden.

Im Rahmen des Verfahrens wird anhand eines in dem Steuergerät fest hinterlegten Verweises ein erster Codeblock einer ersten Applikation, der ausführbaren Programmcode dieser Applikation enthält, beschafft. Anhand von in dem Steuergerät ebenfalls fest hinterlegten Verifizierungsinformationen wird geprüft, ob dieser erste Codeblock auf einem zu diesen Verifizierungsinformationen korrespondierenden Stand ist. In Antwort darauf, dass das Ergebnis dieser Prüfung positiv ist, wird der in dem ersten Codeblock enthaltene Programmcode zur Ausführung freigegeben.

Unter einer festen Hinterlegung im Steuergerät ist insbesondere eine Form der Hinterlegung zu verstehen, die vom Endnutzer des Steuergeräts nicht oder zumindest nicht ohne Wissen und Wollen des Herstellers des Steuergeräts oder einer anderen zur Vornahme von Veränderungen am Steuergerät autorisierten Stelle frei verändert werden kann. Hierfür können beispielsweise Speichermodule oder Speichermedien verwendet werden, in denen einzelne Bits, Bytes oder Blöcke von Bytes ausgehend vom Neuzustand durch einen irreversiblen physikalischen Schreibprozess auf neue Werte gesetzt werden können. Ein Beispiel hierfür sind Speichermodule, in denen einzelne Bits durch das Durchbrennen oder anderweitige Zerstören elektrisch leitender Strukturen umgeschaltet werden.

Unter einer festen Hinterlegung im Steuergerät ist aber auch beispielsweise eine Hinterlegung in einem Trusted Platform Module, TPM, oder einem Hardwaresicherheitsmodul, HSM, zu verstehen. Eine solche Hinterlegung kann physikalisch gesehen im Nachhinein veränderbar, jedoch an den Besitz eines bestimmten kryptographischen Schlüssels oder anderen Berechtigungsmerkmals gebunden sein.

Unter dem Beschaffen eines Codeblocks, oder allgemein eines beliebigen Blocks von Informationen, anhand eines Verweises ist insbesondere beispielsweise das Abrufen dieses Blocks aus einem programmierbaren Speicher des Steuergeräts unter Nutzung einer durch den Verweis gegebenen Speicheradresse zu verstehen. Dies ist jedoch nicht die einzige Möglichkeit. Der Verweis kann beispielsweise auch genutzt werden, um den Block aus dem Internet zu laden.

Wenn eine hinreichend schnelle Internetanbindung verfügbar ist (etwa über 5G-Mobilfunk), muss analog zum bislang in lokalen Netzwerken praktizierten PXE-Netzwerkbooten nur eine minimale Funktionalität auf dem Steuergerät selbst vorgehalten werden, und die Applikationen können dann jeweils immer in der aktuellsten Fassung nachgeladen werden.

Mindestens anhand eines in dem ersten Codeblock enthaltenen Verweises wird ein Übergabeblock beschafft, der einen Verweis auf einen weiteren Codeblock einer weiteren Applikation enthält. Dieser weitere Codeblock enthält ausführbaren Programmcode der weiteren Applikation. Anhand von in dem ersten Codeblock hinterlegten Verifizierungsinformationen wird geprüft, ob der Übergabeblock auf einem zu diesen Verifizierungsinformationen korrespondierenden Stand ist. In Antwort darauf, dass das Ergebnis dieser Prüfung positiv ist, wird anhand des in dem Übergabeblock enthaltenen Verweises der weitere Codeblock der weiteren Applikation beschafft.

In der gleichen Weise kann dann auch der Codeblock der weiteren Applikation wiederum einen Verweis enthalten, mit dem ein nächster Übergabeblock und schließlich ein nächster Codeblock einer nächsten Applikation beschafft werden kann.

Mit dem Verfahren kann der Bootvorgang eines Steuergeräts über das bloße Erfordernis, dass nur autorisierter Code ausgeführt wird, dahingehend abgesichert werden, dass für die Reihenfolge der ausgeführten Applikationen ein Zwangsweg vorgegeben wird. Somit ist es für den Endnutzer des Steuergeräts nicht möglich, diese Reihenfolge eigenmächtig zu ändern oder die Ausführung bestimmter Applikationen eigenmächtig zu unterdrücken.

Das bedeutet im Umkehrschluss, dass die Zergliederung der Funktionalität des Steuergeräts in einzelne Applikationen, die nacheinander auszuführen sind, kein besonderes Sicherheitsrisiko mehr darstellt. Eine monolithische Applikation, die die gesamte Funktionalität des Steuergeräts abdeckt, lässt sich zwar (beispielsweise kryptographisch) besonders gut gegen Manipulation absichern, ist im Gegenzug jedoch vergleichsweise umständlich upzudaten bzw. zu erweitern. Insbesondere an Steuergeräten für Fahrzeuge, die ein breites Spektrum an Aufgaben abdecken, und den jeweiligen Applikationen wirken häufig mehrere Hersteller mit. Wenn am Ende eine monolithische Applikation entstehen muss, muss ein Hersteller die Beiträge von allen anderen Herstellern zusammenführen und dies bei jedem Update einer Einzelkomponente wiederholen. Sind hingegen die von mehreren Herstellern implementierten Funktionalitäten in mehreren Applikationen untergebracht, können die Applikationen unabhängig voneinander geupdatet werden. Jedoch schafft dies ohne die hier beschriebene zusätzliche Sicherung Möglichkeiten, in den Bootvorgang des Steuergeräts einzugreifen.

Eine Motivation für solche Eingriffe durch den Endnutzer kann beispielsweise darin bestehen, dass manche Fahrzeuge, etwa Elektrokleinstfahrzeuge (auch als "E-Scooter" bekannt) oder elektromotorisch unterstützte Fahrräder ("Pedelecs" oder "E-Bikes") für den Einsatz in vielen Ländern produziert werden, jedoch in jedem Land anderen regulatorischen Vorgaben für die Nutzung unterliegen. Rein technisch sind diese Fahrzeuge dann mit allen Funktionen ausgerüstet, die in irgendeinem der vorgesehenen Länder gebraucht werden, und für die maximale in irgendeinem dieser Länder benötigte Leistung und Geschwindigkeit ausgelegt. Es wird lediglich durch die Software auf dem Steuergerät festgelegt, dass beispielsweise die Tretunterstützung eines E-Bikes in Deutschland nur bis zu einer Geschwindigkeit von 25 km/h aktiv ist und dass ein Aktivieren des Motors ausschließlich durch Treten möglich ist, nicht jedoch durch Betätigen eines Gasgriffs oder anderen Bedienelements mit der Hand. Die Einhaltung dieser Bestimmungen ist zwingende Voraussetzung dafür, dass das E-Bike rechtlich als Fahrrad gilt und ohne Führerschein und Versicherungsschutz im öffentlichen Straßenverkehr benutzt werden darf. Irgendwo im Bootprozess des E-Bikes wird dementsprechend eine Applikation sitzen, die anhand des Einsatzlandes den Rahmen des Erlaubten festlegt, bevor dann beispielsweise eine Applikation für das Antriebssystem das E-Bike entsprechend der so festgelegten Parameter tatsächlich fahren lässt. Wenn es dem Endnutzer nun gelingt, die Bootreihenfolge umzudrehen, kann er auch die nicht zulässigen Funktionen nutzen und mit der technisch maximal möglichen Geschwindigkeit fahren. Wenn ein derartiger Eingriff mit wenigen Handgriffen und ohne besonderes Wissen oder Werkzeug möglich ist, kann sogar schon diese abstrakte Möglichkeit dem Nutzer erhebliche Konsequenzen bescheren, auch wenn er den Eingriff gar nicht beabsichtigt: Er wird zunächst einmal mit einem Ermittlungsverfahren wegen des Fahrens mit einem nicht zugelassenen, nicht versteuerten und nicht versicherten Fahrzeug (und möglicherweise auch ohne Fahrerlaubnis) konfrontiert und muss sich gegen diesen Tatvorwurf zur Wehr setzen.

Vorteilhaft wird anhand von in dem Übergabeblock enthaltenen Verifizierungsinformationen geprüft, ob der weitere Codeblock auf einem zu diesen Verifizierungsinformationen korrespondierenden Stand ist. In Antwort darauf, dass das Ergebnis dieser Prüfung positiv ist, wird der in dem weiteren Codeblock enthaltene Programmcode zur Ausführung freigegeben. Auf diese Weise kann ausgehend von einem einzigen im Steuergerät fest hinterlegten Verweis und einem einzigen dort fest hinterlegten Datensatz mit Verifizierungsinformationen (Vertrauensanker, "Root of Trust") eine Vertrauenskette ("Chain of Trust") aufgebaut werden, die über eine beliebige Anzahl nacheinander auszuführender Applikationen reicht.

In einer besonders vorteilhaften Ausgestaltung wird anhand des in dem ersten Codeblock enthaltenen Verweise nicht unmittelbar der Übergabeblock beschafft, sondern zunächst ein Verweisblock. Anhand der in dem ersten Codeblock hinterlegten Verifizierungsinformationen wird dann geprüft, ob der Verweisblock auf einem zu diesen Verifizierungsinformationen korrespondierenden Stand ist. In Antwort darauf, dass das Ergebnis dieser Prüfung positiv ist, wird anhand eines in dem Verweisblock enthaltenen Verweises der Übergabeblock beschafft. Der Verweisblock kann dann optional noch eigene Verifizierungsinformationen enthalten, die an Stelle der Verifizierungsinformationen in dem ersten Codeblock verwendet werden können, um den Übergabeblock zu verifizieren. Da es eine Vertrauenskette von den Verifizierungsinformationen im ersten Codeblock zu den Verifizierungsinformationen im Verweisblock gibt, ist es für das Sicherheitsniveau unerheblich, mit welchen Verifizierungsinformationen der Übergabeblock bestätigt wird. Wenn der Verweisblock eigene Verifizierungsinformationen enthält, schafft dies eine noch größere Granularität dahingehend, welche Entitäten den Bootablauf des Steuergeräts in welcher Weise abändern können.

Das Zwischenschalten eines Verweisblocks erleichtert insbesondere beispielsweise in dem eingangs beschriebenen Szenario, in dem Applikationen von verschiedenen Herstellern zusammenwirken, die Aufgabentrennung. So kann beispielsweise mittels des Verweisblocks ausgewählt werden, welche Applikation als nächstes ausgeführt wird, aber die Wartung und Updates dieser Applikation kann dem jeweiligen Fremdhersteller überlassen werden.

In dem genannten Beispiel des E-Bikes kann etwa für jedes Einsatzland ein Lokalisierungsteam dafür zuständig sein, die rechtlichen Vorgaben bezüglich der Benutzung des E-Bikes im Straßenverkehr in entsprechende Betriebsparameter für das E-Bike (etwa bezüglich der Geschwindigkeit oder Nutzbarkeit von Funktionen) umzusetzen. Der Hersteller des E-Bikes ist hingegen dafür verantwortlich, dass das E-Bike sein Verhalten überhaupt dem jeweiligen Einsatzland anpasst.

Dieses Szenario lässt sich beispielsweise umsetzen, indem für jedes beabsichtige Einsatzland ein Übergabeblock erstellt wird, der einen Verweis (etwa eine URL) auf eine Lokalisierungs-Applikation für dieses Einsatzland sowie einen öffentlichen kryptographischen Schlüssel des entsprechenden Lokalisierungsteams enthält. Der Hersteller des E-Bikes kann dann je nach beabsichtigtem Einsatzland für ein konkretes Exemplar mit dem Verweisblock festschreiben, welcher dieser Übergabe-Blöcke ausgewählt wird. Jedes Exemplar des E-Bikes kann also mit dem gleichen Sortiment an ÜbergabeBlöcken ausgestattet werden; zu ändern ist pro Exemplar nur der Verweisblock. Updates oder sonstige Änderungen der Lokalisierungs-Applikationen machen jeweils weder eine Änderung des Übergabeblocks noch eine Änderung des Verweisblocks erforderlich. Es genügt, unter der im Übergabeblock hinterlegten URL eine neue Version mit einer digitalen Signatur zu hinterlegen, die sich mit dem im Übergabeblock hinterlegten öffentlichen Schlüssel bestätigen lässt.

Die Verifizierungsinformationen können beispielsweise einen Hashwert umfassen. In Antwort darauf, dass dieser Hashwert mit einem über einen Codeblock, Übergabeblock bzw. Verweisblock gebildeten Hashwert übereinstimmt, kann dann festgestellt werden, dass dieser Codeblock, Übergabeblock bzw. Verweisblock auf einem zu den Verifizierungsinformationen korrespondierenden Stand ist.

In einer besonders vorteilhaften Ausgestaltung umfassen die Verifizierungsinformationen mindestens einen öffentlichen Schlüssel eines asymmetrischen Kryptosystems. In Antwort darauf, dass ein Codeblock, Übergabeblock bzw. Verweisblock mit einem zu diesem öffentlichen Schlüssel gehörenden geheimen Schlüssel gültig signiert ist, kann dann festgestellt werden, dass dieser Codeblock, Übergabeblock bzw. Verweisblock auf einem zu den Verifizierungsinformationen korrespondierenden Stand ist. Einen öffentlichen Schlüssel als Verifizierungsinformation zu nutzen hat den besonderen Vorteil, dass dieser Schlüssel auch dann gleich bleiben kann, wenn der zu verifizierende Codeblock, Übergabeblock bzw. Verweisblock geändert wird. Wenn sich die Signatur bestätigen lässt, steht fest, dass sie mit dem richtigen geheimen Schlüssel vorgenommen wurde. Damit steht dann fest, dass der Codeblock, Übergabeblock bzw. Verweisblock von einer hierzu befugten Entität geändert wurde.

Mit öffentlichen Schlüsseln als Verifizierungsinformationen lässt sich besonders einfach abgestuft verwalten, wer zur Änderung bestimmter Abläufe und Einstellungen berechtigt ist. So können beispielsweise bestimmte Änderungen lediglich einem Fahrzeughersteller vorbehalten sein, während andere Änderungen, wie etwa die zusätzliche Initialisierung einer elektronischen Anhängerkupplung, auch an das Straßenverkehrsamt oder den TÜV delegiert werden können, die den nachträglichen Anbau dieser Anhängerkupplung abnehmen und in die Fahrzeugpapiere eintragen.

In einer weiteren besonders vorteilhaften Ausgestaltung umfasst der erste Codeblock, der Übergabeblock, und/oder der Verweisblock, zusätzlich eine Angabe von Berechtigungen für den Zugriff auf Systemressourcen des Steuergeräts, und/oder für die Ausführung von Aktionen im oder mit dem Steuergerät. Der Zugriff der weiteren Applikation auf Systemressourcen, und/oder die Ausführung von Aktionen durch die weitere Applikation, wird gemäß diesen Berechtigungen begrenzt. Auf diese Weise kann die besagte Aufgabenteilung zwischen Herstellern verschiedener Applikationen dahingehend verbessert werden, dass gegenseitige Beeinträchtigungen und Unverträglichkeiten von Applikationen vermindert werden. Gleichzeitig wird insbesondere beim Einsatz eines Steuergeräts in einem Fahrzeug die Sicherheit tendenziell immer gestärkt, wenn eine Applikation immer nur dies tun kann und darf, was ihrem beabsichtigten Einsatzzweck entspricht.

So sind beispielsweise Fahrzeuge intern seit der breiten Einführung des CAN-Bus so vernetzt, dass prinzipiell alle Sensoren, Aktoren und Steuergeräte miteinander Verbindung aufnehmen könnten. Bevor diese Vernetzung eingeführt wurde, wurden mit großen Kabelbäumen jeweils dedizierte Punkt-zu-Punkt-Verbindungen für genau diejenigen Kommunikationsbeziehungen geschaffen, die für das Fahrzeug gewünscht und beabsichtigt waren. Die besagte Vernetzung erlaubt hier sehr viel mehr Flexibilität, was unter anderem das Nachrüsten von Funktionalität deutlich erleichtert. Jedoch hat es nicht nur Vorteile, wenn beispielsweise auch das Entertainment-System prinzipiell in der Lage ist, mit fahrdynamischen Systemen zu kommunizieren. Das Entertainment-System mag dies im Rahmen seines Normalbetriebs nicht tun, nach einer Kaperung durch einen Angreifer jedoch möglicherweise sehr wohl. Wenn beispielsweise die Implementierung des Codecs für das Dekodieren von DAB-Digitalradio nicht ausreichend abgesichert ist, könnte ein Angreifer beispielsweise mit einem speziell angefertigten, nicht spezifikationsgemäßen Datenstrom den Codec in eine Situation bringen, die bei seiner Entwicklung niemals vorgesehen war. Wenn etwa laut Spezifikation mit einem Datenfeld die Größe eines dann folgenden Blocks von Audiodaten anzukündigen ist, kann der Angreifer statt der angekündigten 1000 Bytes 5000 Bytes schicken. Hat der Codec auf die Ankündigung der 1000 Bytes auch nur für 1000 Bytes Speicher reserviert, kann durch die überzähligen 4000 Bytes möglicherweise Information im Speicher überschrieben werden, die für den Kontrollfluss des Codecs relevant ist. Der Codec führt dann nicht mehr seine vorgesehene Aufgabe aus, sondern das, was der Angreifer in den überzähligen 4000 Bytes verpackt hat. Der Angriff ließe sich mit einem hinreichend starken UKW-Sender an einem exponierten Standort auf viele Fahrzeuge gleichzeitig verüben.

Wenn jedoch die für das Entertainment-System zuständige Applikation lediglich den Zugriff auf die Innenraumlautsprecher und das Kombiinstrument im Cockpit bekommt, nicht jedoch auf fahrdynamische Systeme, dann kann der in dem beispielhaft beschriebenen Angriffsszenario drohende Schaden deutlich eingedämmt werden.

Besonders vorteilhaft räumt eine Angabe von Berechtigungen im Kontext einer Vorgänger-Applikation einer auszuführenden Nachfolger-Applikation Berechtigungen nur jeweils maximal in dem Umfang ein in dem auch die Vorgänger-Applikation diese Berechtigungen besitzt. Dies erschwert es, durch das Ausführen einer weiteren vorhandenen Applikation, die möglicherweise sogar gültig signiert ist, Berechtigungseinschränkungen zu unterlaufen.

Vorteilhaft wird die weitere Applikation bzw. Nachfolger-Applikation durch die Angabe von Berechtigungen vom Zugriff speziell auf solche Systemressourcen, bzw. von der Ausführung speziell von solchen Aktionen, die die Fahrsicherheit und/oder eine erteilte Betriebserlaubnis eines Fahrzeugs tangieren können, ausgeschlossen. Es kann dann also beispielsweise verhindert werden, dass der Halter des Fahrzeugs selbst die zuvor beispielhaft beschriebene Lücke im Entertainment-System des Fahrzeugs oder eine beliebige andere Sicherheitslücke ausnutzt, um sein Fahrzeug nach der Art des bei Smartphones beliebten "Jailbreakens" oder "Rootens" von den aus technischen und rechtlichen Gründen festgelegten Einschränkungen zu "befreien" und so beispielsweise mehr Motorleistung zu erzielen auf Kosten der Allgemeinheit, die unter dem verschlechterten Abgas- und Geräuschverhalten zu leiden hat.

In einer weiteren besonders vorteilhaften Ausgestaltung veranlasst mindestens eine Applikation das Steuergerät dazu, einen oder mehrere Dienste bereitzustellen, die auch nach dem Wechsel zur Ausführung der weiteren Applikation aktiv bleiben. Das Verfahren kann dann dazu genutzt werden, für das Starten dieser Dienste eine Reihenfolge zwangsläufig festzulegen, damit sich beispielsweise ein Fahrzeug mit dem Steuergerät nach dem Hochfahren der Dienste immer in einem definierten Zustand befindet.

In dem eingangs erwähnten Beispiel des E-Bikes kann ein solcher Dienst etwa die aktuelle Fahrgeschwindigkeit und den Druck auf die Pedale überwachen. Aus dem Verhältnis zwischen der Fahrgeschwindigkeit einerseits und dem Pedaldruck andererseits kann dann etwa die Anforderung abgeleitet werden, die Motorunterstützung zu aktivieren, sofern die hierfür zulässige Höchstgeschwindigkeit nicht überschritten ist. Der Zwangsweg in der BootReihenfolge stellt dann sicher, dass die besagten länderspezifischen Einschränkungen festgelegt werden, bevor die Motorunterstützung aktiviert wird.

In einer weiteren besonders vorteilhaften Ausgestaltung wird zusätzlich zur Prüfung, ob ein Codeblock auf einem zu Verifizierungsinformationen korrespondierenden Stand ist, auch geprüft, ob ein während der Ausführung dieses Codeblocks benötigter Datenblock auf einem zu Verifizierungsinformationen korrespondierenden Stand ist. Der in dem Codeblock enthaltene Programmcode wird nur dann zur Ausführung freigegeben, wenn auch das Ergebnis dieser Prüfung positiv ist. Wie eingangs erwähnt, wird das konkrete Verhalten der Applikation häufig durch einen Datenblock charakterisiert, der beispielsweise Kennfelder von Reglern oder Gewichte neuronaler Netzwerke umfassen kann. Dementsprechend lässt sich durch eine Manipulation des Datenblocks genauso schwerwiegend in die Funktionalität des Steuergeräts eingreifen wie durch eine Manipulation des ausführbaren Programmcodes. Dabei ist eine zielgerichtete Manipulation beispielsweise durch den Nutzer eines Fahrzeugs an dem Datenblock mitunter noch deutlich einfacher möglich als am Programmcode, den der Nutzer ohne Spezialkenntnisse nicht verstehen kann. Das "Reverse Engineering" einer nur als binärer Objektcode vorliegenden Applikation dahingehend, welche Änderung im Programmcode welchen Effekt haben könnte, ist eine sehr anspruchsvolle Aufgabe. Hingegen ist es einsichtig, dass in einem Datenblock mit einem Motorkennfeld beispielsweise das Erhöhen von Werten, die ohnehin schon hoch sind, eine Leistungssteigerung des Motors bewirken kann.

Die Funktionalität des beschriebenen Verfahrens kann ganz oder teilweise in Software implementiert sein. Daher bezieht sich die Erfindung auch auf ein Computerprogramm mit maschinenlesbaren Anweisungen, die, wenn sie auf einem oder mehreren Computern ausgeführt werden, den oder die Computer dazu veranlassen, eines der beschriebenen Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin kann ein Computer mit dem Computerprogramm, mit dem maschinenlesbaren Datenträger bzw. mit dem Downloadprodukt ausgerüstet sein. Dieser Computer kann insbesondere ein Steuergerät für ein Fahrzeug und/oder für ein Antriebsaggregat eines Fahrzeugs sein.

In einer besonders vorteilhaften Ausgestaltung enthält dieses Steuergerät ein Hardwaresicherheitsmodul, HSM, und/oder ein Trusted Platform Module, TPM. Dieses HSM bzw. TPM beinhaltet den in dem Steuergerät fest hinterlegten Verweis auf den ersten Codeblock der ersten Applikation sowie die fest hinterlegten Verifizierungsinformationen für diesen ersten Codeblock. Die genannten Module sind besonders sichere Verwahrorte für die Vertrauensanker, mit denen alle späteren Codeblöcke, Übergabeblöcke und Verweisblöcke verifiziert werden können.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel des Verfahrens 100 zum Betreiben eines Steuergeräts 1;
Figur 2 Ausführungsbeispiel eines Steuergeräts 1, auf dem drei Applikationen 2, 3, 4 installiert sind.

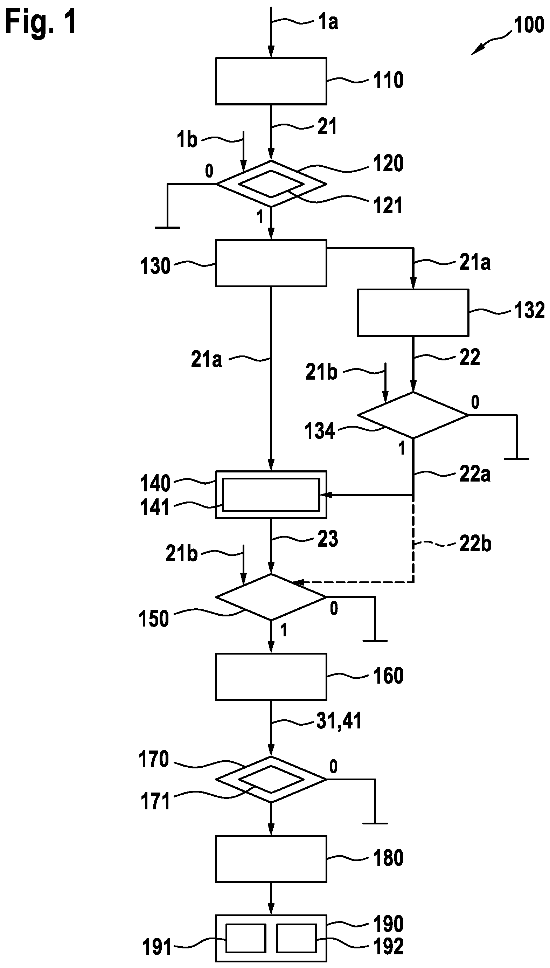

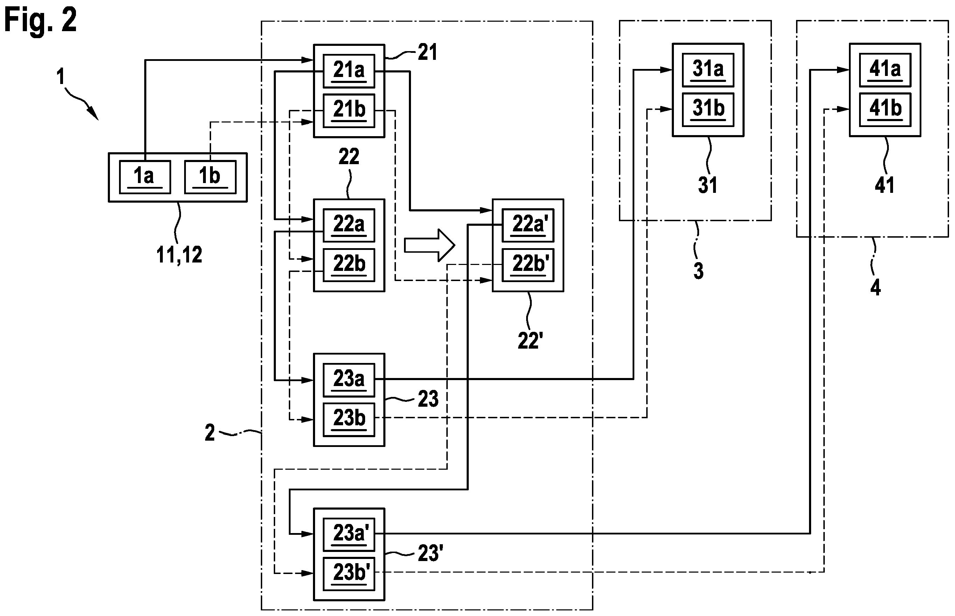

Figur 1 ist ein schematisches Ablaufdiagramm eines Ausführungsbeispiels des Verfahrens 100 zum Betreiben eines Steuergeräts 1, dessen Inhalt in Figur 2 näher dargestellt ist.

In Schritt 110 wird anhand eines in dem Steuergerät 1 fest hinterlegten Verweises 1a ein erster Codeblock 21 einer ersten Applikation 2, der ausführbaren Programmcode dieser Applikation 2 enthält, beschafft. In Schritt 120 wird anhand von in dem Steuergerät 1 ebenfalls fest hinterlegten Verifizierungsinformationen 1b geprüft, ob dieser erste Codeblock 21 auf einem zu diesen Verifizierungsinformationen 1b korrespondierenden Stand ist. Hierbei kann optional gemäß Block 121 mitgeprüft werden, ob ein während der Ausführung des ersten Codeblocks 21 benötigter Datenblock ebenfalls auf einem zu den Verifizierungsinformationen 1b korrespondierenden Stand ist. Wenn die Prüfung für den Codeblock 21, und gegebenenfalls auch für den Datenblock, ein positives Ergebnis liefert (Wahrheitswert 1), wird in Schritt 130 der in dem ersten Codeblock 21 enthaltene Programmcode zur Ausführung freigegeben.

Ein in dem Codeblock 21 enthaltener Verweis 21a kann nun direkt auf einen Übergabeblock 23 zeigen, der dann in Schritt 140 beschafft werden kann. Alternativ kann der Verweis 21a aber auch auf einen Verweisblock 22 zeigen. Dieser Verweisblock wird dann in Schritt 132 beschafft, und in Schritt 134 wird geprüft, ob der ob der Verweisblock 22 auf einem zu den Verifizierungsinformationen 21b aus dem ersten Codeblock 21 korrespondierenden Stand ist. Ist dies der Fall, kann anhand eines in dem Verweisblock 22 enthaltenen Verweises 22a gemäß Block 141 der Übergabeblock 23 beschafft werden.

In Schritt 150 wird mindestens anhand von in dem ersten Codeblock 21 hinterlegten Verifizierungsinformationen 21b geprüft, ob der Übergabeblock 23 auf einem zu diesen Verifizierungsinformationen 21b korrespondierenden Stand ist. Statt die Verifizierungsinformationen 21b hierfür direkt zu nutzen, können auch Verifizierungsinformationen 22b aus einem Verweisblock 22 verwendet werden, der seinerseits mit den Verifizierungsinformationen 21b des ersten Codeblocks 21 bestätigt wurde. Wenn das Ergebnis dieser Prüfung positiv ist (Wahrheitswert 1), wird in Schritt 160 anhand des in dem Übergabeblock 23 enthaltenen Verweises 23a der weitere Codeblock 31, 41 der weiteren Applikation 3, 4 beschafft.

In Schritt 170 kann dann anhand von in dem Übergabeblock 23 enthaltenen Verifizierungsinformationen 23b geprüft werden, ob der weitere Codeblock 31, 41 auf einem zu diesen Verifizierungsinformationen 23b korrespondierenden Stand ist. Analog zu Schritt 120 kann gemäß Block 171 mitgeprüft werden, ob mit diesen Verifizierungsinformationen 23b auch ein während der Ausführung des Codeblocks 31, 41 benötigter Datenblock bestätigt werden kann. Wenn das Ergebnis der Prüfung für den Codeblock 31, 41, und ggfs. auch für den jeweils benötigten Datenblock, positiv ist (Wahrheitswert 1), wird in Schritt 180 der in dem weiteren Codeblock 31, 41 enthaltene Programmcode zur Ausführung freigegeben.

Die Ausführung dieses Programmcodes kann in Schritt 190 unter Randbedingungen bezüglich Berechtigungen für den Zugriff auf Systemressourcen des Steuergeräts 1, und/oder für die Ausführung von Aktionen im oder mit dem Steuergerät 1, gestellt werden. Diese Randbedingungen können durch entsprechende Angaben im ersten Codeblock 21, im Übergabeblock 23, und/oder im Verweisblock 2, gesetzt werden. Dabei kann insbesondere beispielsweise gemäß Block 191 eine Angabe von Berechtigungen im Kontext einer Vorgänger-Applikation 21 einer auszuführenden Nachfolger-Applikation 31, 41 Berechtigungen nur jeweils maximal in dem Umfang einräumen, in dem auch die Vorgänger-Applikation 21 diese Berechtigungen besitzt.

Gemäß Block 192 kann die weitere Applikation bzw. Nachfolger-Applikation 31, 41 durch die Angabe von Berechtigungen insbesondere beispielsweise vom Zugriff speziell auf solche Systemressourcen, bzw. von der Ausführung speziell von solchen Aktionen, die die Fahrsicherheit und/oder eine erteilte Betriebserlaubnis eines Fahrzeugs tangieren können, ausgeschlossen werden.

Figur 2 zeigt beispielhaft den Inhalt eines Steuergeräts 1, das entsprechend dem zuvor beschriebenen Verfahren 100 betrieben werden kann. Das Steuergerät 11 hat ein Hardwaresicherheitsmodul, HSM 11, und/oder ein Trusted Platform Module, TPM 12, in dem der Verweis 1a und die Verifizierungsinformationen 1b fest hinterlegt sind.

Anhand des Verweises 1a kann der ersten Codeblock 21 der ersten Applikation 2 beschafft werden. Er kann dann anhand der Verifizierungsinformationen 1b bestätigt werden. In dem in Figur 2 gezeigten Beispiel kann ein Verweis 21a im ersten Codeblock 21 wahlweise auf einen ersten Verweisblock 22 oder auf einen zweiten Verweisblock 22' zeigen. Wenn der Verweis 21a auf den ersten Verweisblock 22 zeigt, kann dieser erste Verweisblock 22 beschafft und mit den Verifizierungsinformationen 21b im ersten Codeblock 21 bestätigt werden. Zeigt der Verweis 21a hingegen auf den zweiten Verweisblock 22', kann dieser zweite Verweisblock 22' beschafft und mit den Verifizierungsinformationen 21b bestätigt werden.

Der erste Verweisblock 22 zeigt mit seinem Verweis 22a auf den ersten Übergabeblock 23, der mit Verifizierungsinformationen 22b des ersten Verweisblocks 22 (oder auch mit Verifizierungsinformationen 21b des ersten Codeblocks 21) bestätigt werden kann. Der erste Übergabeblock 23 zeigt mit seinem Verweis 23a wiederum auf den Codeblock 31 der zweiten Applikation 3 und enthält außerdem Verifizierungsinformationen 23b, mit denen dieser Codeblock 31 bestätigt werden kann. Der Codeblock 31 enthält analog zum Codeblock 21 einen Verweis 31a und Verifizierungsinformationen 31b.

Der zweite Verweisblock 22' zeigt mit seinem Verweis 22a' auf den zweiten Übergabeblock 23, der mit Verifizierungsinformationen 22b' des zweiten Verweisblocks 22' (oder auch mit Verifizierungsinformationen 21b des ersten Codeblocks 21) bestätigt werden kann. Der zweite Übergabeblock 23' zeigt mit seinem Verweis 23a' wiederum auf den Codeblock 41 der dritten Applikation 4 und enthält außerdem Verifizierungsinformationen 23b', mit denen dieser Codeblock 41 bestätigt werden kann. Der Codeblock 41 enthält analog zum Codeblock 21 einen Verweis 41a und Verifizierungsinformationen 41b.

Auf diese Weise kann durch einen bloßen Austausch des ersten Verweisblocks 22 gegen den zweiten Verweisblock 22', der nur ein sehr geringes Datenvolumen erfordert, festgelegt werden, dass nach der ersten Applikation 2 die dritte Applikation 4 an Stelle der zweiten Applikation 3 ausgeführt wird.

Der Wechsel von der zweiten Applikation 3 zur dritten Applikation 4 als nächster auszuführender Applikation kann alternativ auch durch den direkten Austausch des ersten Übergabeblocks 23 gegen den zweiten Übergabeblock 23' bewirkt werden.

Die dritte Applikation 4 muss nicht zwingend völlig verschieden von der zweiten Applikation 3 sein, sondern kann beispielsweise auch ein Update der zweiten Applikation 3 sein.

Optional können Verweisblöcke 22, 22' auch noch auf Datenblöcke verweisen, die von der Applikation 2 benötigt werden. Die Verweisblöcke 22, 22' können aber auch auf Schlüssel-Blöcke verweisen, die analog zu den Übergabeblöcken 23 einen Verweis auf den Datenblock und Verifizierungsinformationen für dessen Bestätigung enthalten. Damit kann dann jeder Datenblock seine eigene Signaturquelle haben, mit der frei definiert werden kann, wer zu einem Update dieses Datenblocks berechtigt ist.

## Patentansprüche

1. Verfahren (100) zum Betreiben eines Steuergeräts (1), auf dem mehrere Applikationen (2, 3, 4) ausgeführt werden, mit den Schritten:
• anhand eines in dem Steuergerät (1) fest hinterlegten Verweises (1a) wird ein erster Codeblock (21) einer ersten Applikation (2), der ausführbaren Programmcode dieser Applikation (2) enthält, beschafft (110);
• anhand von in dem Steuergerät (1) fest hinterlegten Verifizierungsinformationen (1b) wird geprüft (120), ob dieser erste Codeblock (21) auf einem zu diesen Verifizierungsinformationen (1b) korrespondierenden Stand ist;
• in Antwort darauf, dass das Ergebnis dieser Prüfung positiv ist, wird der in dem ersten Codeblock (21) enthaltene Programmcode zur Ausführung freigegeben (130);
• mindestens anhand eines in dem ersten Codeblock (21) enthaltenen Verweises (21a) wird ein Übergabeblock (23) beschafft (140), der einen Verweis (23a) auf einen weiteren Codeblock (31, 41) einer weiteren Applikation (3, 4) enthält, wobei dieser weitere Codeblock (31, 41) ausführbaren Programmcode der weiteren Applikation (3, 4) enthält;
• mindestens anhand von in dem ersten Codeblock (21) hinterlegten Verifizierungsinformationen (21b) wird geprüft (150), ob der Übergabeblock (23) auf einem zu diesen Verifizierungsinformationen (21b) korrespondierenden Stand ist;
• in Antwort darauf, dass das Ergebnis dieser Prüfung positiv ist, wird anhand des in dem Übergabeblock (23) enthaltenen Verweises (23a) der weitere Codeblock (31, 41) der weiteren Applikation (3, 4) beschafft (160).

2. Verfahren (100) nach Anspruch 1, wobei
• anhand von in dem Übergabeblock (23) enthaltenen Verifizierungsinformationen (23b) geprüft wird (170), ob der weitere Codeblock (31, 41) auf einem zu diesen Verifizierungsinformationen (23b) korrespondierenden Stand ist, und
• in Antwort darauf, dass das Ergebnis dieser Prüfung positiv ist, der in dem weiteren Codeblock (31, 41) enthaltene Programmcode zur Ausführung freigegeben wird (180).

3. Verfahren (100) nach einem der Ansprüche 1 bis 2, wobei
• anhand des in dem ersten Codeblock (21) enthaltenen Verweises (21a) ein Verweisblock (22) beschafft wird (132);
• anhand der in dem ersten Codeblock (21) hinterlegten Verifizierungsinformationen (21b) geprüft wird (134), ob der Verweisblock (22) auf einem zu diesen Verifizierungsinformationen (21b) korrespondierenden Stand ist; und
• in Antwort darauf, dass das Ergebnis dieser Prüfung positiv ist, anhand eines in dem Verweisblock (22) enthaltenen Verweises (22a) der Übergabeblock (23) beschafft wird (141).

4. Verfahren (100) nach einem der Ansprüche 1 bis 3, wobei die Verifizierungsinformationen (1b, 21b, 22b, 23b) mindestens einen Hashwert umfassen und wobei in Antwort darauf, dass dieser Hashwert mit einem über einen Codeblock (21, 31, 41), Übergabeblock (23) bzw. Verweisblock (22) gebildeten Hashwert übereinstimmt, festgestellt wird (120, 134, 150, 170), dass dieser Codeblock (21), Übergabeblock (23) bzw. Verweisblock (22) auf einem zu den Verifizierungsinformationen (1b, 21b, 22b, 23b) korrespondierenden Stand ist.

5. Verfahren (100) nach einem der Ansprüche 1 bis 4, wobei die Verifizierungsinformationen (1b, 21b, 22b, 23b) mindestens einen öffentlichen Schlüssel eines asymmetrischen Kryptosystems umfassen und wobei in Antwort darauf, dass ein Codeblock (21, 31, 41), Übergabeblock (23) bzw. Verweisblock (22) mit einem zu diesem öffentlichen Schlüssel gehörenden geheimen Schlüssel gültig signiert ist, festgestellt wird (120, 134, 150, 170), dass dieser Codeblock (21, 31, 41), Übergabeblock (23) bzw. Verweisblock (22) auf einem zu den Verifizierungsinformationen (1b, 21b, 22b, 23b) korrespondierenden Stand ist.

6. Verfahren (100) nach einem der Ansprüche 1 bis 5, wobei der erste Codeblock (21), der Übergabeblock (23), und/oder der Verweisblock (22), zusätzlich eine Angabe von Berechtigungen für den Zugriff auf Systemressourcen des Steuergeräts (1), und/oder für die Ausführung von Aktionen im oder mit dem Steuergerät (1), umfasst und wobei der Zugriff der weiteren Applikation auf Systemressourcen, und/oder die Ausführung von Aktionen durch die weitere Applikation (31, 41), gemäß diesen Berechtigungen begrenzt wird (190).

7. Verfahren (100) nach Anspruch 6, wobei eine Angabe von Berechtigungen im Kontext einer Vorgänger-Applikation (21) einer auszuführenden Nachfolger-Applikation (31, 41) Berechtigungen nur jeweils maximal in dem Umfang einräumt (191), in dem auch die Vorgänger-Applikation (21) diese Berechtigungen besitzt.

8. Verfahren (100) nach einem der Ansprüche 6 bis 7, wobei die weitere Applikation (31, 41) bzw. Nachfolger-Applikation (31, 41) durch die Angabe von Berechtigungen vom Zugriff speziell auf solche Systemressourcen, bzw. von der Ausführung speziell von solchen Aktionen, die die Fahrsicherheit und/oder eine erteilte Betriebserlaubnis eines Fahrzeugs tangieren können, ausgeschlossen wird (192).

9. Verfahren (100) nach einem der Ansprüche 1 bis 8, wobei mindestens eine Applikation (2) das Steuergerät (1) dazu veranlasst, einen oder mehrere Dienste bereitzustellen, die auch nach dem Wechsel zur Ausführung der weiteren Applikation (3, 4) aktiv bleiben.

10. Verfahren (100) nach einem der Ansprüche 1 bis 9, wobei zusätzlich zur Prüfung (120, 170), ob ein Codeblock (21, 31, 41) auf einem zu Verifizierungsinformationen korrespondierenden Stand ist, auch geprüft wird (121, 171), ob ein während der Ausführung dieses Codeblocks (21, 31, 41) benötigter Datenblock auf einem zu Verifizierungsinformationen (1b, 23b) korrespondierenden Stand ist, und wobei der in dem Codeblock (21, 31, 41) enthaltene Programmcode nur dann zur Ausführung freigegeben wird, wenn auch das Ergebnis dieser Prüfung positiv ist.

11. Computerprogramm, enthaltend maschinenlesbare Anweisungen, die, wenn sie auf einem oder mehreren Computern ausgeführt werden, den oder die Computer dazu veranlassen, das Verfahren (100) nach einem der Ansprüche 1 bis 10 auszuführen.

12. Maschinenlesbarer Datenträger und/oder Downloadprodukt mit dem Computerprogramm nach Anspruch 11.

13. Computer mit dem Computerprogramm nach Anspruch 11, und/oder mit dem maschinenlesbaren Datenträger und/oder Downloadprodukt nach Anspruch 12.

14. Steuergerät (1) für ein Fahrzeug und/oder für ein Antriebsaggregat eines Fahrzeugs als Computer nach Anspruch 13.

15. Steuergerät (1) nach Anspruch 14, umfassend ein Hardwaresicherheitsmodul, HSM (11), und/oder ein Trusted Platform Module, TPM (12), welches den in dem Steuergerät fest hinterlegten Verweis (1a) auf den ersten Codeblock (21) der ersten Applikation (2) sowie die fest hinterlegten Verifizierungsinformationen (1b) für diesen ersten Codeblock (21) beinhaltet.

## Claims

1. Method (100) for operating a control unit (1) on which multiple applications (2, 3, 4) are executed, comprising the steps of:
• taking a reference (1a) permanently stored in the control unit (1) as a basis for obtaining (110) a first code block (21) of a first application (2), which code block contains executable program code of this application (2);
• taking verification information (1b) permanently stored in the control unit (1) as a basis for checking (120) whether this first code block (21) is at a level that corresponds to this verification information (1b);
• responding to the result of this check being positive by approving (130) the program code contained in the first code block (21) for execution;
• taking at least a reference (21a) contained in the first code block (21) as a basis for obtaining (140) a transfer block (23) that contains a reference (23a) to another code block (31, 41) of another application (3, 4), this other code block (31, 41) containing executable program code of the other application (3, 4);
• taking at least verification information (21b) stored in the first code block (21) as a basis for checking (150) whether the transfer block (23) is at a level that corresponds to this verification information (21b);
• responding to the result of this check being positive by taking the reference (23a) contained in the transfer block (23) as a basis for obtaining (160) the other code block (31, 41) of the other application (3, 4).

2. Method (100) according to Claim 1, wherein
• verification information (23b) contained in the transfer block (23) is taken as a basis for checking (170) whether the other code block (31, 41) is at a level that corresponds to this verification information (23b), and
• in response to the result of this check being positive, the program code contained in the other code block (31, 41) is approved (180) for execution.

3. Method (100) according to either of Claims 1 to 2, wherein
• the reference (21a) contained in the first code block (21) is taken as a basis for obtaining (132) a reference block (22);
• the verification information (21b) stored in the first code block (21) is taken as a basis for checking (134) whether the reference block (22) is at a level that corresponds to this verification information (21b); and
• in response to the result of this check being positive, a reference (22a) contained in the reference block (22) is taken as a basis for obtaining (141) the transfer block (23).

4. Method (100) according to one of Claims 1 to 3, wherein the verification information (1b, 21b, 22b, 23b) comprises at least one hash value and wherein, in response to this hash value matching a hash value formed for a code block (21, 31, 41), transfer block (23) or reference block (22), this code block (21), transfer block (23) or reference block (22) is determined (120, 134, 150, 170) as being at a level that corresponds to the verification information (1b, 21b, 22b, 23b).

5. Method (100) according to one of Claims 1 to 4, wherein the verification information (1b, 21b, 22b, 23b) comprises at least one public key of an asymmetric cryptosystem and wherein, in response to a code block (21, 31, 41), transfer block (23) or reference block (22) being validly signed with a secret key belonging to this public key, this code block (21, 31, 41), transfer block (23) or reference block (22) is determined (120, 134, 150, 170) as being at a level that corresponds to the verification information (1b, 21b, 22b, 23b).

6. Method (100) according to one of Claims 1 to 5, wherein the first code block (21), the transfer block (23) and/or the reference block (22) additionally comprises an indication of permissions for accessing system resources of the control unit (1), and/or for performing actions in or with the control unit (1), and wherein the other application's access to system resources, and/or the performance of actions by the other application (31, 41), is limited (190) according to these permissions.

7. Method (100) according to Claim 6, wherein an indication of permissions in the context of a predecessor application (21) grants (191) permissions to a successor application (31, 41) that is to be executed only to the particular maximum extent to which the predecessor application (21) also has these permissions.

8. Method (100) according to either of Claims 6 to 7, wherein the indication of permissions excludes (192) the other application (31, 41), or successor application (31, 41), from accessing specifically such system resources, or from performing specifically such actions, as can affect the driving safety of and/or an issued operating licence for a vehicle.

9. Method (100) according to one of Claims 1 to 8, wherein at least one application (2) causes the control unit (1) to provide one or more services that remain active even after execution has switched to the other application (3, 4).

10. Method (100) according to one of Claims 1 to 9, wherein, in addition to the check (120, 170) to ascertain whether a code block (21, 31, 41) is at a level that corresponds to verification information, a check (121, 171) is also carried out to ascertain whether a data block required during the execution of this code block (21, 31, 41) is at a level that corresponds to verification information (1b, 23b), and wherein the program code contained in the code block (21, 31, 41) is released for execution only if the result of this check is also positive.

11. Computer program, containing machine-readable instructions that, when executed on one or more computers, cause the computer(s) to carry out the method (100) according to one of Claims 1 to 10.

12. Machine-readable data carrier and/or download product comprising the computer program according to Claim 11.

13. Computer comprising the computer program according to Claim 11 and/or comprising the machine-readable data carrier and/or download product according to Claim 12.

14. Control unit (1) for a vehicle and/or for a drive unit of a vehicle as a computer according to Claim 13.

15. Control unit (1) according to Claim 14, comprising a hardware safety module, HSM (11), and/or a trusted platform module, TPM (12), which contains the reference (1a) permanently stored in the control unit to the first code block (21) of the first application (2) and also the permanently stored verification information (1b) for this first code block (21).

## Revendications

1. Procédé (100) destiné à faire fonctionner un appareil de commande (1), sur lequel plusieurs applications (2, 3, 4) sont exécutées, avec les étapes :
• obtention (110), à l'aide d'un renvoi (1a) enregistré en permanence dans l'appareil de commande (1), d'un premier bloc de code (21) d'une première application (2), qui contient le code de programme exécutable de ladite application (2) ;
• vérification (120) à l'aide des informations de vérification (1b) enregistrées en permanence dans l'appareil de commande (1) si ledit premier bloc de code (21) est à un niveau correspondant auxdites informations de vérification (1b) ;
• validation (130), en réponse au résultat positif de ladite vérification, du code de programme contenu dans le premier bloc de code (21) pour exécution ;
• obtention (140), au moins à l'aide d'un renvoi (21a) contenu dans le premier bloc de code (21), d'un bloc de transfert (23), qui contient un renvoi (23a) à un autre bloc de code (31, 41) d'une autre application (3, 4), ledit autre bloc de code (31, 41) contenant un code de programme exécutable de l'autre application (3, 4) ;
• vérification (150) au moins à l'aide d'informations de vérification (21b) enregistrées dans le premier bloc de code (21) si le bloc de transfert (23) est à un niveau correspondant auxdites informations de vérification (21b) ;
• obtention (160) en réponse au résultat positif de ladite vérification, de l'autre bloc de code (31, 41) de l'autre application (3, 4) à l'aide du renvoi (23a) contenu dans le bloc de transfert (23).

2. Procédé (100) selon la revendication 1,
• le fait de savoir si l'autre bloc de code (31, 41) est à un niveau correspondant auxdites informations de vérification (23b) étant vérifié (170) à l'aide d'informations de vérification (23b) contenues dans le bloc de transfert (23), et
• en réponse au résultat positif de ladite vérification, le code de programme contenu dans l'autre bloc de code (31, 41) étant validé pour exécution (180).

3. Procédé (100) selon l'une des revendications 1 à 2,
• un bloc de renvoi (22) étant obtenu (132) à l'aide du renvoi (21a) contenu dans le premier bloc de code (21) ;
• le fait de savoir si le bloc de renvoi (22) est à un niveau correspondant auxdites informations de vérification (21b) étant vérifié (134) à l'aide des informations de vérification (21b) enregistrées dans le premier bloc de code (21) ; et
• en réponse au résultat positif de ladite vérification, le bloc de transfert (23) étant obtenu (141) à l'aide d'un renvoi (22a) contenu dans le bloc de renvoi (22).

4. Procédé (100) selon l'une des revendications 1 à 3, les informations de vérification (1b, 21b, 22b, 23b) comprenant au moins une valeur de hachage et, en réponse au fait que ladite valeur de hachage concorde avec une valeur de hachage formée par un bloc de code (21, 31, 41), un bloc de transfert (23) ou un bloc de renvoi (22), le fait que ledit bloc de code (21), ledit bloc de transfert (23) ou ledit bloc de renvoi (22) se trouve à un niveau correspondant aux informations de vérification (1b, 21b, 22b, 23b) étant constaté (120, 134, 150, 170).

5. Procédé (100) selon l'une des revendications 1 à 4, les informations de vérification (1b, 21b, 22b, 23b) comprenant au moins une clé publique d'un système cryptographique asymétrique, et, en réponse au fait qu'un bloc de code (21, 31, 41), un bloc de transfert (23) ou un bloc de renvoi (22) soit signé valablement avec une clé secrète appartenant à ladite clé publique, le fait que ledit bloc de code (21, 31, 41), ledit bloc de transfert (23) ou ledit bloc de renvoi (22) se trouve à un niveau correspondant aux informations de vérification (1b, 21b, 22b, 23b) étant constaté (120, 134, 150, 170).

6. Procédé (100) selon l'une des revendications 1 à 5, le premier bloc de code (21), le bloc de transfert (23) et/ou le bloc de renvoi (22) comprenant en supplément une indication d'autorisations d'accès à des ressources système de l'appareil de commande (1) et/ou d'exécution d'actions dans ou avec l'appareil de commande (1), et l'accès de l'autre application à des ressources système et/ou l'exécution d'actions par l'autre application (31, 41) étant limités en fonction desdites autorisations (190).

7. Procédé (100) selon la revendication 6, une indication d'autorisations dans le contexte d'une application de prédécesseur (21) d'une application de successeur (31, 41) à exécuter concédant des autorisations uniquement dans chaque cas au maximum dans la mesure dans laquelle l'application de prédécesseur (21) possède également lesdites autorisations (191).

8. Procédé (100) selon l'une des revendications 6 à 7, l'autre application (31, 41) ou l'application de successeur (31, 41) étant exclue (192) par l'indication d'autorisations d'accès spécifiques à de telles ressources système ou de l'exécution spécifique d'actions telles qui peuvent affecter la sécurité de conduite et/ou une autorisation opérationnelle accordée d'un véhicule.

9. Procédé (100) selon l'une des revendications 1 à 8, au moins une application (2) amenant l'appareil de commande (1) à fournir un ou plusieurs services qui restent actifs même après le changement de l'exécution de l'autre application (3, 4).

10. Procédé (100) selon l'une des revendications 1 à 9, le fait de savoir si un bloc de données requis pendant l'exécution dudit bloc de code (21, 31, 41) se trouve à un niveau correspondant à des informations de vérification (1b, 23b) étant vérifié (121, 171) également en plus de la vérification (120, 170) pour savoir si un bloc de code (21, 31, 41) est à un niveau correspondant à des informations de vérification, et le code de programme contenu dans le bloc de code (21, 31, 41) n'étant validé que pour l'exécution lorsque le résultat de ladite vérification est positif également.

11. Programme informatique contenant des instructions lisibles par machine qui, lorsqu'elles sont exécutées sur un ou plusieurs ordinateurs, amènent le(s) ordinateur(s) à exécuter le procédé (100) selon l'une des revendications 1 à 10.

12. Support de données lisible par machine et/ou produit à télécharger avec le programme informatique selon la revendication 11.

13. Ordinateur avec le programme informatique selon la revendication 11 et/ou avec le support de données lisible par machine et/ou le produit à télécharger selon la revendication 12.

14. Appareil de commande (1) pour un véhicule et/ou pour un groupe motopropulseur d'un véhicule sous la forme d'un ordinateur selon la revendication 13.

15. Appareil de commande (1) selon la revendication 14, comprenant un module de sécurité matériel, HSM, (11) et/ou un module de plate-forme de confiance, TPM, (12), qui contient le renvoi (1a), enregistré de façon permanente dans l'appareil de commande, au premier bloc de code (21) de la première application (2) et les informations de vérification (1b) enregistrées de façon permanente pour ledit premier bloc de code (21).
